# EUROPEAN PATENT APPLICATION

(11) **EP 4 679 153 A1**
(43) Date of publication of application: **14.01.2026**
(21) Application number: 23866671.3
(22) Date of filing: 29.06.2023
(51) Int. Cl.: G02B 6/44

(54) **OPTICAL DISTRIBUTION FRAME AND REVERSING METHOD**

(30) Priority: 10.03.2023 CN 202310226604
(71) Applicant: Fiberhome Telecommunication Technologies Co., Ltd, Wuhan, Hubei 430000 (CN)
(72) Inventor: LIU, Wen, Wuhan Hubei 430000 (CN); DU, Jin, Wuhan Hubei 430000 (CN); LIU, Lan, Wuhan Hubei 430000 (CN); HUANG, Li, Wuhan Hubei 430000 (CN)
(74) Representative: Kuhnen & Wacker Patent- und Rechtsanwaltsbüro PartG mbB
(86) International application number: PCT/CN2023/103697
(87) International publication number: WO 2024/187636

(57) **Abstract**

Disclosed are an optical fiber distribution sub-frame and a reversing method, comprising a base plate, two opposite sides of which are each provided with a mounting point position; a bracket, which is detachably mounted at the mounting point position on any side of the base plate; and an optical fiber channel tray, which is hinged to the bracket, and when the bracket is mounted at the mounting point positions on different sides, the optical fiber channel tray is reversed along with the bracket. When the bracket changes position, the optical fiber channel tray connected to the bracket can be reversed together, so that the bracket and the optical fiber channel tray can be replaced from one side of the base plate to the opposite side, and after reversing, the base plate can be replaced from one rotation direction to the other relative to the optical fiber channel tray, therefore, one sub-frame can meet two different usage scenarios of left-hand rotation and right-hand rotation through disassembling and reversing, without the need to prepare two types of sub-frames, reducing stocking inventory, thereby saving time and costs.

## Description

### Field of Technical

The present application relates to the technical field of optical fiber communication, in particular to an optical fiber distribution sub-frame and a reversing method.

### Background of Invention

At present, ODF sub-frame is an optical fiber distribution equipment designed for optical fiber communication room, which has the functions of fixing and protecting optical cables, terminating optical cables, adjusting wires, protecting optical cable cores and pigtails. The ODF sub-frame is generally mounted on the ODF rack. In actual use, operations will be performed on the sub-frame.

In the related art, the traditional common sub-frame is fixed or tray drawing type, which cannot rotate the sub-frame out of the rack and is inconvenient to use. The existing rotatable sub-frame can only satisfy one-way rotation of either left or right. However, in the actual use process, sometimes the usage scenario will be changed. At this time, the traditional fixed or tray drawing type sub-frames and one-way rotating sub-frames cannot meet the use requirements, and new sub-frames with appropriate direction will usually be replaced, which will lead to an increase in cost, and there will not always be suitable replacement sub-frames on site.

Therefore, it is necessary to design a new optical fiber distribution subframe and a reversing method to overcome the above problems.

### Content of Invention

The embodiment of the present invention provides an optical fiber distribution sub-frame and a reversing method to solve the problem in the related art that the traditional fixed or tray drawing type sub-frames and one-way rotating sub-frames cannot meet the use requirement of scene change, resulting in increased cost.

In a first aspect, an optical fiber distribution sub-frame is provided, comprising a base plate, two opposite sides of which are each provided with a mounting point position; a bracket, which is detachably mounted at the mounting point position on any side of the base plate; and an optical fiber channel tray, which is hinged to the bracket, and when the bracket is mounted at the mounting point positions on different sides, the optical fiber channel tray is reversed along with the bracket.

In some embodiments, the base plate is symmetrically arranged about a central axis thereof, and the mounting point positions are symmetrically distributed on opposite sides of the central axis.

In some embodiments, the bracket is provided with a sliding buckle, the mounting point position is provided with a sliding groove, and the bracket and the base plate are detachably connected through the sliding buckle and the sliding groove.

In some embodiments, the bracket is further provided with a first limiting part, the mounting point position is provided with a second limiting part correspondingly, the first limiting part matches with the second limiting part to limit the position, an extension direction of the first limiting part is different from that of the sliding buckle, and a limiting direction of the sliding buckle to the base plate is at least partially different from that of the first limiting portion to the base plate.

In some embodiments, the optical fiber channel tray and the bracket are detachably hinged together by means of locking screws.

In some embodiments, the bracket is provided with a first fiber penetrating channel, the first fiber penetrating channel is configured for an optical fiber to enter the base plate, the bracket is further provided with a protective pressure strip blocking one side of the first fiber penetrating channel; and the bracket is further provided with a protective bracket, the protective bracket is arranged in the first fiber penetrating channel, and the protective bracket is provided with an optical fiber beam penetrating hole.

In some embodiments, the two opposite sides of the base plate are each provided with an optical fiber perforation, and the optical fiber perforations communicate with the first fiber penetrating channel; and two side surfaces of the base plate provided with the optical fiber perforations extend obliquely in a direction approaching each other, so that a distance between the optical fiber perforations on the two sides is smaller than a maximum distance between the two side surfaces.

In some embodiments, the optical fiber distribution sub-frame further comprises an adapter assembly, and the adapter assembly comprises: an adapter bracket, which is detachably connected to the base plate; and an adapter, which is arranged obliquely relative to the adapter bracket, and the adapter is detachably clamped to the adapter bracket.

In some embodiments, the adapter bracket is provided with at least one mounting window, each mounting window is provided with at least two adapter mounting positions, the adapter bracket is provided with a clamping structure that matches with the adapter corresponding to each adapter mounting position; and the adapter bracket is further provided with an elastic arm, the clamping structure located at one end of the mounting window is provided on the elastic arm, and when the elastic arm is shifted, all the adapters in the mounting window corresponding to the elastic arm are unlocked.

In some embodiments, the adapter bracket comprises a frame and a support plate arranged in the frame, the support plate separates the frame into at least two of the mounting windows, and one end of the support plate is spaced apart from an inner wall of the frame to form a receiving space, and this end of the support plate is connected to the frame by means of connecting rods, each connecting rod is provided with two of the elastic arms, the elastic arms are all received in the receiving space, and the elastic arms correspond one-to-one with the mounting windows.

In some embodiments, two fiber storage areas are symmetrically arranged in the base plate, a fiber splicing area is arranged between the two fiber storage areas, fixing modules are symmetrically arranged in the base plate corresponding to entrances of the fiber storage areas, and the fixing modules are detachably connected to the base plate.

In some embodiments, the bracket is detachably mounted with a supporting member, and the supporting member is provided with a jumper outlet.

In a second aspect, a method for reversing the optical fiber distribution sub-frame is provided, comprising the following steps: removing the bracket together with the optical fiber channel tray from the mounting point position on one side of the base plate; and reversibly mounting the bracket to the mounting point position on the other side of the base plate, and making the optical fiber channel tray follow a reversal of the bracket.

In some embodiments, the step before removing the bracket together with the optical fiber channel tray from the mounting point position on one side of the base plate further comprises: unlocking and removing the adapter assembly from the base plate, wherein the adapter assembly comprises an adapter bracket and an adapter; removing the adapter from the adapter bracket; and reversing the adapter bracket and remounting the adapter.

In some embodiments, the step of removing the adapter from the adapter bracket further comprises: shifting the elastic arm on the adapter bracket to unlock and remove the first adapter in each set of adapters from the adapter bracket; and sliding to remove the remaining adapters.

In some embodiments, the step after removing the bracket together with the optical fiber channel tray from the mounting point position on one side of the base plate comprises: reversing the protective pressure strip and protective bracket on the bracket.

In some embodiments, the step after removing the bracket together with the optical fiber channel tray from the mounting point position on one side of the base plate further comprises: removing the fixing modules at the entrances of the two fiber storage areas in the base plate; and replacing the fixing modules at the entrances of the two fiber storage areas in the base plate.

The beneficial effects of the technical solution provided in the present invention comprise:
The embodiment of the present invention provides an optical fiber distribution sub-frame and a reversing method, the optical fiber distribution subframe is provided with a bracket connected between the base plate and the optical fiber channel tray, and the bracket can be detached from the base plate and replaced from one side of the base plate to the other, when the bracket changes position, the optical fiber channel tray connected to the bracket can be reversed together, so that the bracket and the optical fiber channel tray can be replaced from one side of the base plate to the opposite side, and after reversing, the base plate can be replaced from one rotation direction to the other relative to the optical fiber channel tray, therefore, one sub-frame can meet two different usage scenarios of left-hand rotation and right-hand rotation through disassembling and reversing, without the need to prepare two types of sub-frames, reducing stocking inventory, thereby saving time and costs.

### Drawings of the Specification

In order to better illustrate the technical solution in the embodiments of the present application, the following will briefly introduce the drawings needed in the description of the embodiments, and it is obvious that the drawings in the following description are only a part of embodiments of the present application, for those of ordinary skill in the art, other drawings may further be obtained based on these drawings without any inventive effort.
Fig. 1 is a three-dimensional exploded view of an optical fiber distribution sub-frame in the embodiment of the present invention;
Fig. 2 is a front view of an optical fiber distribution sub-frame in the embodiment of the present invention;
Fig. 3 is a structural diagram of an optical fiber distribution sub-frame with adapters mounted in the embodiment of the present invention;
Fig. 4 is a structural diagram of an optical fiber distribution sub-frame with adapters removed in the embodiment of the present invention;
Fig. 5 is a structural diagram of matching the first limiting part with the second limiting part in the embodiment of the present invention;
Fig. 6 is a back view of an optical fiber distribution sub-frame in the embodiment of the present invention;
Fig. 7 is a structural diagram of a base plate rotated 90° to the left in the embodiment of the present invention;
Fig. 8 is a structural diagram of a base plate rotated 90° to the right in the embodiment of the present invention;
Fig. 9 is a structural diagram of a bracket in the embodiment of the present invention;
Fig. 10 is a structural diagram of an optical fiber channel tray and a bracket located on a left side in the embodiment of the present invention;
Fig. 11 is a structural diagram of an optical fiber channel tray and a bracket located on a right side in the embodiment of the present invention;
Fig. 12 is a structural diagram of a base plate main body in the embodiment of the present invention;
Fig. 13 is a structural diagram of an adapter assembly in the embodiment of the present invention;
Fig. 14 is a structural diagram of an adapter bracket in the embodiment of the present invention;
Fig. 15 is a partial structural diagram of an adapter bracket in the embodiment of the present invention;
Fig. 16 is a structural diagram of an adapter bracket from the back in the embodiment of the present invention;
Fig. 17 is a structural diagram of a switch in the embodiment of the present invention;

In the figures:
1-base plate; 11-base plate body; 111-sliding groove; 112-the second limiting part; 113-optical fiber perforation; 114-locking buckle;
12-fiber tray; 121-fiber storage area; 122-fiber splicing area; 123-buckling position; 124-buckling ear;
14-panel fixing bracket; 15-fixing module; 16-switch; 161-unlocking torsional spring; 162-unlocking buckle;
2-bracket; 21-bracket main body; 211-sliding buckle; 212-the first fiber penetrating channel; 213-the first limiting part; 22-protective pressure strip; 23-protective bracket; 24-supporting member;
3-optical fiber channel tray; 31-channel tray main body; 311-the second fiber penetrating channel; 33-protective cap; 34-mounting ear; 35-locking screw;
4-adapter assembly; 41-adapter bracket; 411-mounting window; 412-clamping structure; 413-elastic arm; 414-frame; 415-support plate; 416-connecting rod; 417-extension section; 42-adapter;
5-front panel; 6-bottom tray.

### Detailed Description of the Embodiments

In order to make the purpose, technical solutions and advantages of the embodiments of the present invention clearer, the technical solutions in the embodiments of the present invention will be described clearly and completely in combination with the drawings in the embodiments of the present invention. Obviously, the described embodiments are only a part of the embodiments of the present invention, not all of the embodiments. Based on the embodiments in the present invention, all other embodiments obtained by a person of ordinary skill in the art without inventive efforts shall fall within the protection scope of the present invention.

The embodiment of the present invention provides an optical fiber distribution sub-frame, which can solve the problem in the related art that the traditional fixed or tray drawing type sub-frames and one-way rotating sub-frames cannot meet the use requirement of scene change, resulting in increased cost.

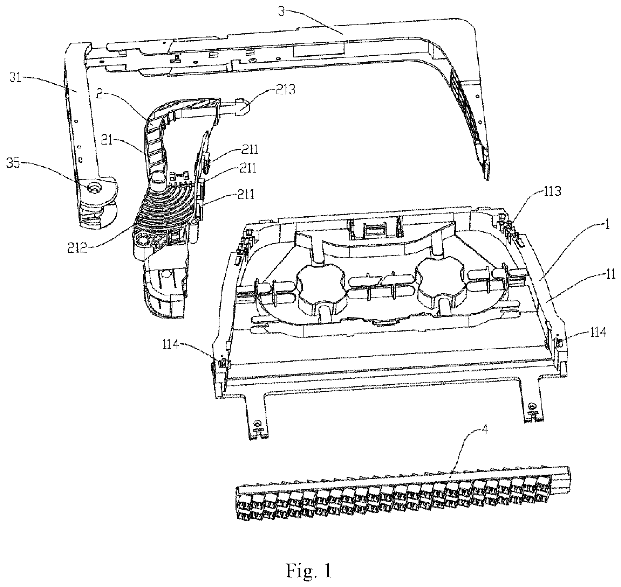

As shown in Fig. 1 to 3, the embodiment of the present invention provides an optical fiber distribution sub-frame, which can comprise a base plate 1, two opposite sides of the base plate are each provided with a mounting point position, in this embodiment, the two opposite sides are preferably left and right sides of the base plate 1, that is, the left side of the base plate 1 is provided with the mounting point position, and the right side of the base plate 1 is further provided with the mounting point position. The optical fiber distribution sub-frame can further comprise a bracket 2, the bracket 2 is detachably mounted at the mounting point position on any side of the base plate 1, it can be understood that the bracket 2 is mounted at the mounting point position of the base plate 1, and the bracket 2 can further be detached from the base plate 1, so that the bracket 2 can be remounted from one side of the base plate 1 to the other side of the base plate 1, the mounting position of the bracket 2 on the base plate 1 can be replaced, and the bracket 2 can be mounted to the other side of the base plate 1 after reversing. The optical fiber distribution sub-frame can further comprise an optical fiber channel tray 3, the optical fiber channel tray 3 is hinged to the bracket 2, and when the bracket 2 is mounted at the mounting point positions on different sides, the optical fiber channel tray 3 can be reversed along with the bracket 2.

In this embodiment, the optical fiber distribution subframe is provided with a bracket 2 connected between the base plate 1 and the optical fiber channel tray 3, and the bracket 2 can be detached from the base plate 1 and replaced from one side of the base plate 1 to the other, when the bracket 2 changes position, the optical fiber channel tray 3 connected to the bracket 2 can be reversed together, so that the bracket 2 and the optical fiber channel tray 3 can be replaced from one side of the base plate 1 to the opposite side, and after reversing, the base plate 1 can be replaced from one rotation direction to the other relative to the optical fiber channel tray 3, and when the mounting point positions are arranged on the left and right sides of the base plate 1, the optical fiber channel tray 3 and the bracket 2 can be reversed and mounted from the left side of the base plate 1 to the right side of the base plate 1; and when the optical fiber channel tray 3 and the bracket 2 are mounted on the left side of the base plate 1 so that the hinge point is located on the left side of the base plate 1, the base plate 1 can realize left-hand rotation relative to the optical fiber channel tray 3, and when the optical fiber channel tray 3 and the bracket 2 are mounted on the right side of the base plate 1 so that the hinge point is located on the right side of the base plate 1, the base plate 1 can realize right-hand rotation relative to the optical fiber channel tray 3. Therefore, one sub-frame can meet two different use scenarios of left-hand rotation and right-hand rotation through disassembling and reversing, without the need to prepare two types of sub-frames, thus reducing the stocking inventory. Moreover, when the usage scenario changes, the direction can be reversed on-site, without the need to find a new subframe to replace, thereby saving time and costs.

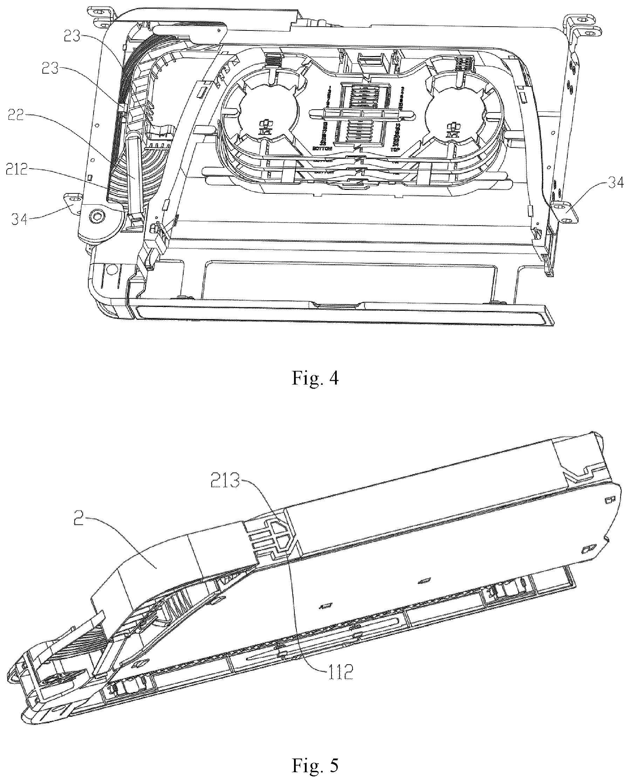

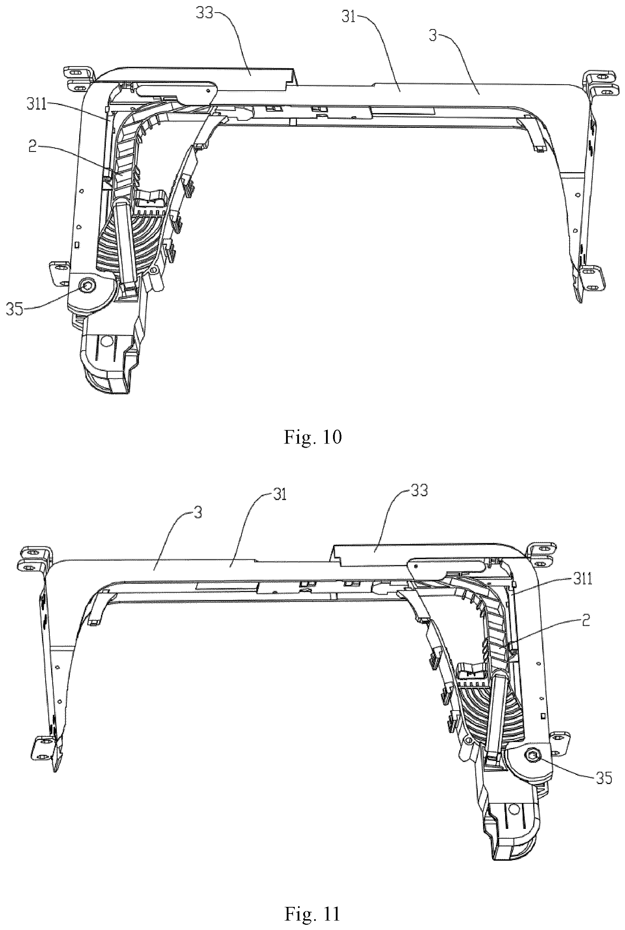

In some embodiments, as shown in Fig. 4 and Figs. 10 to 12, the base plate 1 is symmetrically arranged about a central axis thereof, and the mounting point positions are symmetrically distributed on opposite sides of the central axis. That is, in this embodiment, the left side and the right side of the base plate 1 are symmetrically arranged, and the position of the mounting point position on the left side is the same as that on the right side. Of course, some parts or structures inside the base plate 1 can further be symmetrically arranged, so that when the bracket 2 and the optical fiber channel tray 3 are reversed, the base plate 1 can be directly continued to be used, and the wiring mode is the same as that before the reversal, with little change and relatively simple structure of each part. Of course, in other embodiments, the base plate 1 can further be designed as an asymmetric structure, for example, the mounting point positions on the left and right sides are different. When the bracket 2 is reversed, different parts of the bracket 2 can be matched with the corresponding mounting point positions, which is further possible, but the structure of the bracket 2 may be relatively complex. In this embodiment, it is preferable that the bracket 2 is further configured as a symmetrical structure, and the bracket 2 is symmetrically arranged up and down about the central axis, so that the bracket 2 can still realize the same function as when the bracket 2 is flipped from the left side to the right side.

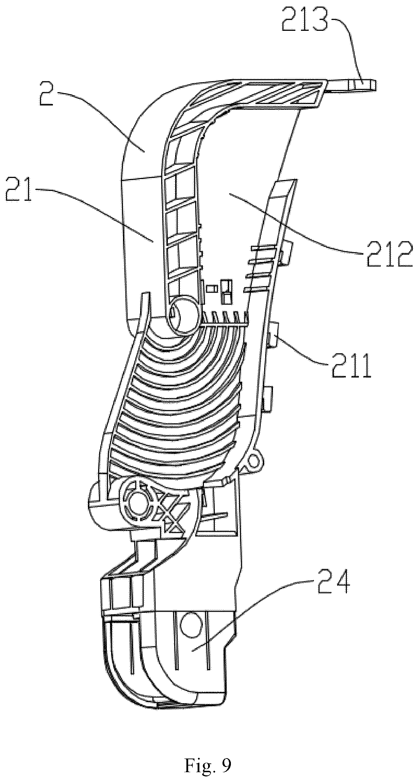

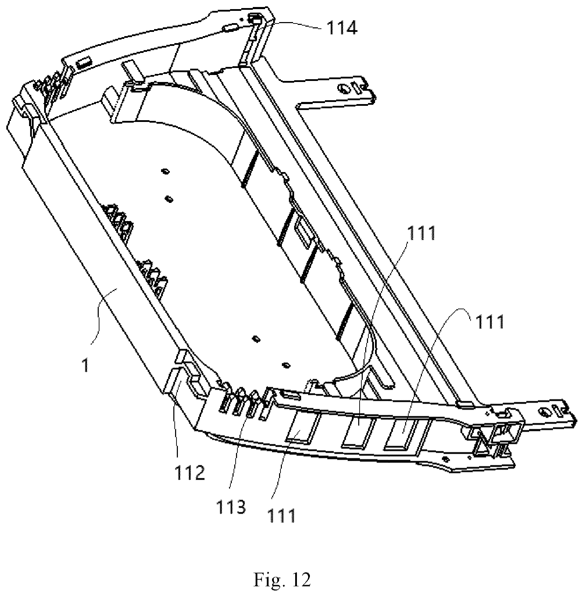

As shown in Fig. 9 and Fig. 12, in some alternative embodiments, the bracket 2 can be provided with a sliding buckle 211, the mounting point position can be provided with a sliding groove 111, and the bracket 2 and the base plate 1 can be detachably connected through the sliding buckle 211 and the sliding groove 111. That is, during the mounting of the bracket 2 with the base plate 1, the sliding buckle 211 will be mounted in a sliding manner relative to the sliding groove 111, and when the sliding buckle 211 is moved in place in the sliding groove 111, the sliding buckle 211 and the sliding groove 111 are stuck, so that the base plate 1 and the bracket 2 are not easily separated from each other. When it is necessary to disassemble, the sliding buckle 211 can be disassembled through taking it out of the sliding groove 111 and can be mounted and reused again next time.

Preferably, the bracket 2 and the base plate 1 can be further fixed by means of fastening screws, so as to improve the fastening degree between the bracket 2 and the base plate 1, prevent the base plate 1 from falling off during use, and at the same time, meet the detachable connection between the bracket 2 and the base plate 1, which is convenient for field disassembly, assembly and reversing.

As shown in Fig. 5, on the basis of the above technical solution, in some embodiments, the bracket 2 can be further provided with a first limiting part 213, the mounting point position is provided with a second limiting part 112 correspondingly, that is, the mounting point position comprises the second limiting part 112, the first limiting part 213 can be matched with the second limiting part 112 to limit the position, an extension direction of the first limiting part 213 is different from that of the sliding buckle 211, wherein, the extension directions of the two can be perpendicular to each other or at a certain angle, and a limiting direction of the sliding buckle 211 to the base plate 1 is at least partially different from that of the first limiting portion 213 to the base plate 1. That is, in this embodiment, the sliding buckle 211 and the sliding groove 111 can be are stuck with each other through the arrangement of the sliding buckle 211, thereby limiting the base plate 1, at the same time, the first limiting part 213 can further limit the base plate 1, since the extension direction of the first limiting part 213 is different from that of the sliding buckle 211, the limiting directions of the two will further be different. In an optional embodiment, the sliding buckle 211 can extend along the front-back direction and can limit the base plate 1 in the front-back or left-right directions. The first limiting part 213 can extend along the left-right direction and can limit the base plate 1 in the left-right or front-back directions, mainly in the left-right direction, so that different parts can limit the base plate 1 in different directions and finally realize the limit of the base plate 1 in a plurality of directions.

As shown in Fig. 1, in some embodiments, the optical fiber channel tray 3 and the bracket 2 are detachably hinged together by means of locking screws 35 so that the optical fiber channel tray 3 and the bracket 2 can rotate relative to each other to form an axis link structure, and since the bracket 2 and the base plate 1 are fixed together, the base plate 1 can rotate together with the bracket 2 relative to the optical fiber channel tray 3. Moreover, the optical fiber channel tray 3 and the bracket 2 are detachable, which is beneficial to the replacement and maintenance of components. Of course, in other embodiments, the optical fiber channel tray 3 and the bracket 2 can further be designed to be non-detachable, and the optical fiber channel tray 3 and the bracket 2 can be rotated, and the optical fiber channel tray 3 and the bracket 2 can be reversed without being detachable, that is, the bracket 2 can be removed from the base plate 1, then the optical fiber channel tray 3 and the bracket 2 are reversed together, and then the bracket 2 is fixed to the base plate 1.

As shown in Fig. 4, in some embodiments, the bracket 2 can be provided with a first fiber penetrating channel 212, the first fiber penetrating channel 212 is configured for an optical fiber to enter the base plate 1, the bracket 2 is further provided with a protective pressure strip 22 blocking one side of the first fiber penetrating channel 212, and the protective pressure strip 22 can be blocked above the first fiber penetrating channel 212, which can protect the optical fiber, comb a plurality of optical fibers and prevent the optical fibers from coming out of the first fiber penetrating channel 212; and the bracket 2 is further provided with a protective bracket 23, the protective bracket 23 is arranged in the first fiber penetrating channel 212, and the protective bracket 23 is provided with an optical fiber beam penetrating hole, through which the optical fiber can pass, and the optical fiber beam penetrating hole can further play a role in arranging wires. During use, when the bracket 2 and the optical fiber channel tray 3 need to be reversed, after the bracket 2 is reversed, the protective pressure strip 22 and the protective bracket 23 further need to be mounted from one side of the bracket 2 to the other side, such as from the back side to the front side. In this embodiment, the upper and lower sides of the bracket 2 are symmetrically provided with the first fiber penetrating channel 212, and the protective pressure strip 22 and the protective bracket 23 are mounted from one side of the bracket 2 to the first fiber penetrating channel 212 on the other side.

As shown in Figs. 1-2 and Fig. 12, in some alternative embodiments, the two opposite sides of the base plate 1 are each provided with an optical fiber perforation 113, and the optical fiber perforations 113 communicate with the first fiber penetrating channel 212 so that optical fibers can enter the interior of the base plate 1 through the optical fiber perforations 113 from the first fiber penetrating channel 212; and two side surfaces of the base plate 1 provided with the optical fiber perforations 113 extend obliquely in a direction approaching each other, so that a distance between the optical fiber perforations 113 on the two sides is smaller than a maximum distance between the two side surfaces. In this embodiment, the optical fiber perforations 113 can be arranged near the rear side of the base plate 1, that is, the front end of the base plate 1 will be relatively wide, the rear end of the base plate 1 will be relatively narrow, and the positions near the optical fiber perforations 113 will be relatively narrow. In order to meet the fiber coiling radius requirements of the fiber tray 12 and considering that the space of the fiber penetrating channel is relatively small, in this embodiment, the left and right sides of the base plate 1 are designed to extend obliquely, so that the space can be reserved for the fiber penetrating channel as far as possible, and the path of the fiber penetrating channel is smooth and safer, especially when entering the optical fiber perforation 113 from the first fiber penetrating channel 212, the turning radius herein can be ensured to be larger, and the damage to the optical fiber can be reduced.

Further, the optical fiber channel tray 3 can be provided with a second fiber penetrating channel 311, the second fiber penetrating channel 311 can communicate with the first fiber penetrating channel 212, and the optical fiber can enter the first fiber penetrating channel 212 from the second fiber penetrating channel 311 and then enter the base plate 1, and the second fiber penetrating channel 311 can further be provided with a plurality of protection brackets 23 to protect the optical fibers.

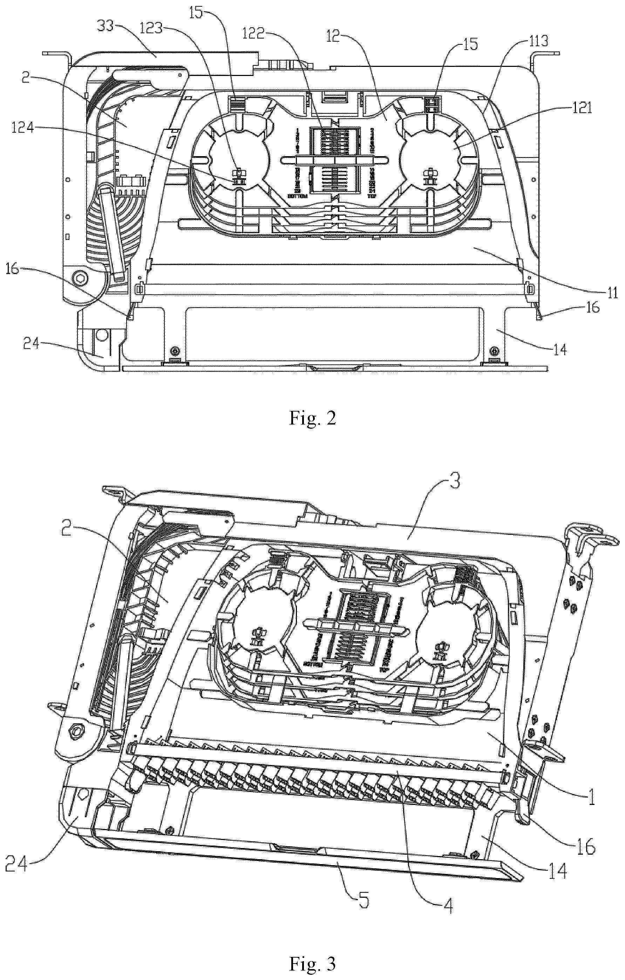

As shown in Fig. 3, in some embodiments, the optical fiber distribution sub-frame can further comprise an adapter assembly 4, the adapter assembly 4 can comprise an adapter bracket 41, the adapter bracket 41 is detachably connected with the base plate 1, when reversing is needed, the adapter bracket 41 can be removed from the base plate 1 and reversed before being mounted, that is, the adapter bracket 41 can be reversed left and right, and is mounted on the base plate 1 in accordance with the rotation direction of the base plate 1. At the same time, the direction of the adapter 42 can be guaranteed to be always upward, the adapter bracket 41 can be fastened with the base plate 1 by means of locking buckles 114 or other detachable fixing methods, and the detachable connection mode of the adapter bracket 41 can ensure that the pigtails on the adapter 42 can come out left or right. The adapter assembly 4 can further comprise an adapter 42, and the adapter 42 is arranged obliquely relative to the adapter bracket 41, and the adapter 42 is detachably clamped to the adapter bracket 41. When the adapter bracket 41 is reversed, the adapter 42 further needs to be removed from the adapter bracket 41, reversed and remounted to replace the position and the inclined direction of the adapter 42. At the same time, the adapter 42 in the optical fiber distribution sub-frame is inclined out, which is different from the general straight out, so that the laser light can be prevented from being directly emitted to the human eye during the straight out, and the reversing direction can be kept consistent with the rotation direction.

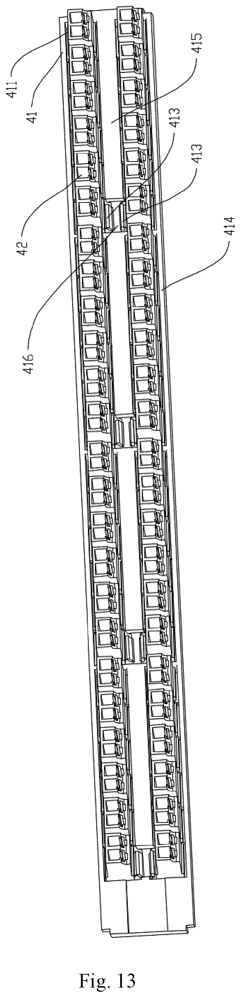

As shown in Figs. 13-14, in some alternative embodiments, the adapter bracket 41 is provided with at least one mounting window 411, each mounting window 411 is provided with at least two adapter mounting positions, the at least two adapter mounting positions are preferably arranged in a row, and the adapter bracket 41 is provided with a clamping structure 412 that matches with the adapter 42 corresponding to each adapter mounting position; and the adapter bracket 41 is further provided with an elastic arm 413, the clamping structure 412 located at one end of the mounting window 411 is provided on the elastic arm 413, and when the elastic arm 413 is shifted, all the adapters 42 in the mounting window 411 corresponding to the elastic arm 413 are unlocked. In this embodiment, the elastic arm 413 has certain elasticity and can be bent, the clamping structure 412 arranged on the elastic arm 413 can move along with the deformation of the elastic arm 413, and the elastic arm 413 can be equivalent to an unlocking switch. After the elastic arm 413 is shifted, all the adapters 42 located in the mounting window 411 can be unlocked and removed. In this embodiment, through arranging the unlocking elastic arm 413, it is convenient to remove and mount the adapter 42. After the adapter 42 is mounted, the last adapter 42 can be clamped with the clamping structure 412 arranged on the elastic arm 413. The shift can be understood as shifting in any direction, which can be upward, downward, left, right, or any direction within 360°. The elastic arm can be designed as a structure that has undergone a plurality of bends, so that no matter what direction you want to shift, an elastic arm can be designed to unlock the adapter after shifting the elastic arm.

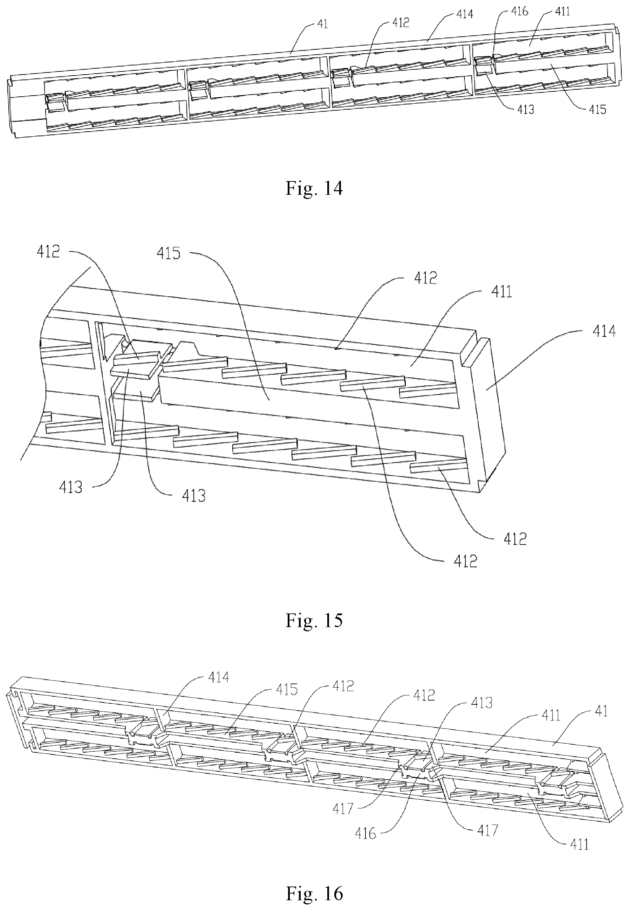

Further, as shown in Fig. 15, in some embodiments, the adapter bracket 41 comprises a frame 414 and a support plate 415 arranged in the frame 414, the support plate 415 separates the frame 414 into at least two of the mounting windows 411, and the number of the support plate 415 can be one or a plurality, in this embodiment, when the number of the support plate 415 is one, the support plate 415 can divide the frame 414 into upper and lower mounting windows 411, and the support plate 415 is located between the upper and lower mounting windows 411; when the number of the support plate 415 is plural, the plurality of the support plates 415 can be arranged in the left-right direction, and the frame 414 can be divided into a plurality of mounting windows 411, and the plurality of the mounting windows 411 are further arranged in the left-right direction; one end of the support plate 415 is spaced apart from an inner wall of the frame 414 to form a receiving space, that is, one end of each support plate 415 is connected to the frame 414 and the other end is spaced from the inner wall of the frame 414; and this end of the support plate 415 (i.e. the end arranged at intervals) is connected to the frame 414 by means of connecting rods 416, each connecting rod 416 is provided with two of the elastic arms 413, the elastic arms 413 are all received in the receiving space, and the elastic arms 413 correspond one-to-one with the mounting windows 411.

In this embodiment, the end of the support plate 415 is connected to the frame 414 by means of the connecting rods 416, which not only ensures the stable support of the support plate 415, but further leaves a receiving space for the elastic arm 413, making full use of the space and providing a moving space for the elastic arm 413; and there is sufficient space so that the elastic arm 413 can be designed longer, which is beneficial to improving the elasticity of the elastic arm 413 and facilitating the disassembly and mounting of the adapter 42; and at the same time, since the receiving space is reserved therein, the width of the connecting rod 416 will be smaller than that of the supporting plate 415, and such an arrangement is helpful to improve the elasticity of the connecting rod 416, and thus improve the elasticity of the elastic arm 413.

Preferably, in this embodiment, the clamping structure 412 is configured as an inclined convex strip, and the convex strip can be fixed on the upper and lower surfaces of the support plate 415, or can further be fixed on the inner wall surface of the frame 414. The adapter 42 can be provided with a groove corresponding to the convex strip. When the adapter 42 is mounted at the corresponding adapter mounting position, the convex strip can protrude into the groove to limit the adapter 42 in the front and back directions. When the last adapter 42 is locked with the clamping structure 412, the left and right directions and the front and back directions of a row of adapters 42 in each mounting window 411 are limited, while the upper and lower directions of the adapters 42 are limited by the inner wall surfaces of the frame 414, so that the adapters 42 cannot move in any direction in the mounting window 411. Of course, in other embodiments, the clamping structure 412 can further be designed as other structures, for example, the clamping structure 412 can further be a groove structure, and an adaptive protruding structure is arranged on the adapter 42 for matching and limiting, and the function of fixing the adapters 42 can further be realized. At the same time, in order to satisfy that the adapter 42 can be removed in a sliding manner, the inner wall surfaces of the support plate 415 and the frame 414 are provided with convex strips, and other surfaces contacting the adapter 42 are all flat surfaces, the flat surfaces can be horizontal surfaces, inclined surfaces, or other curved surfaces, etc., so that the remaining adapters 42 can be removed in a sliding manner after unlocking In this embodiment, convex strips are provided, and the adapters 42 can slide out of the mounting window 411 along the convex strips; and of course, when the adapter 42 is mounted, the adapter 42 can further be inserted into the mounting window 411 along the oblique extension direction of the convex strips.

Preferably, as shown in Fig. 16, the position where the frame 414 and the support plate 415 connect both ends of the connecting rod 416 can extend outward of the frame 414 to form extension sections 417, and both ends of the connecting rod 416 are respectively connected to the two extension sections 417, so that the connecting rod 416 is located outward of the frame 414, and the elastic arm 413 can be made longer to improve elasticity.

As shown in Fig. 1, in some embodiments, two fiber storage areas 121 are symmetrically arranged in the base plate 1, a fiber splicing area 122 is arranged between the two fiber storage areas 121, fixing modules 15 are symmetrically arranged in the base plate 1 corresponding to entrances of the fiber storage areas 121, that is, the positions of the fixing modules 15 are symmetrically arranged, and the internal structural shapes of the fixing modules 15 can be different, and the fixing modules 15 are detachably connected to the base plate 1. One fixing module 15 is configured to fix the outgoing fiber, and the other fixing module 15 is configured to fix the incoming fiber, and when the optical fiber distribution sub-frame is reversed, the positions of the two fixing modules 15 can further be changed. The material of the fixing module 15 can be silicone, rubber, or plastic, etc.

In some alternative embodiments, as shown in Figs. 1 and 2, the bracket 2 is detachably mounted with a supporting member 24, and the supporting member 24 is provided with a jumper outlet. Different from the general optical fiber distribution sub-frame, the embodiment can make a buckle structure on the supporting member 24, and the supporting member 24 can be detachably mounted on the bracket 2, which is convenient for the construction worker to operate.

Preferably, the optical fiber channel tray 3 can comprise a channel tray main body 31, a second fiber penetrating channel 311 is arranged on the channel tray main body 31, a tray cover plate can be arranged on the channel tray main body 31 corresponding to the second fiber penetrating channel 311, and an optical fiber protective cap 33 is arranged on the channel tray main body 31 at the position where the optical fiber enters. Further, mounting ears 34 can be arranged on two opposite sides of the channel tray main body 31, the mounting ears 34 can be fixed on the channel tray main body 31 by means of screws, and through selecting different types of mounting ears 34, the optical fiber distribution sub-frame can be fixed on different ODF racks. The optical fiber protective cap 33 and the tray cover plate can be fixed on the channel tray main body 31 by means of buckles; and the optical fiber channel tray 3 can further comprise the locking screws 35 described above. The optical fiber channel tray 3 can provide left and right mounting modes for fixing the optical fiber distribution sub-frame on the ODF bracket and providing a fiber penetrating channel for the optical fibers at the same time.

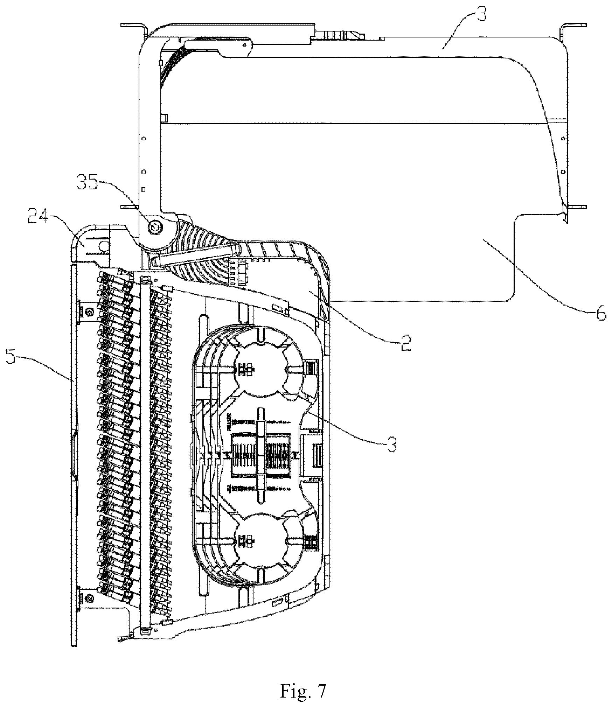

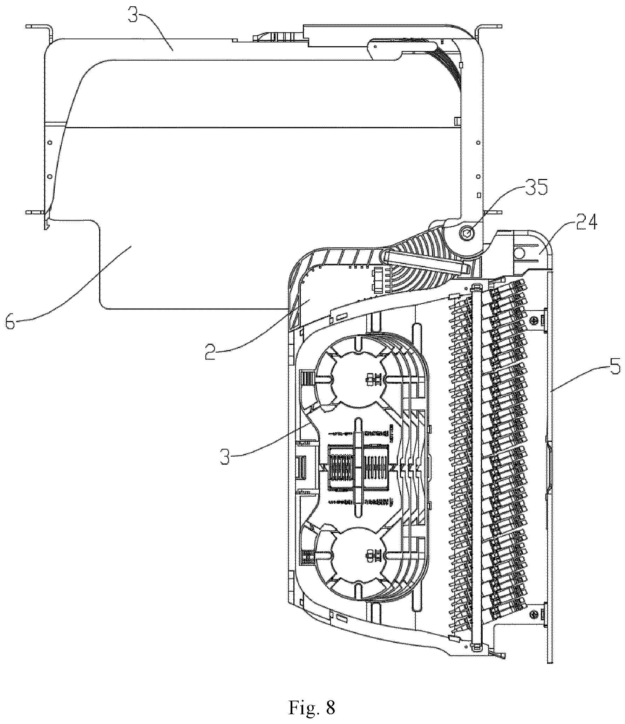

Further, the bracket 2 can comprise a bracket main body 21, the first fiber penetrating channel 212 and the sliding buckle 211 can be arranged on the bracket main body 21, and the protective pressure strip 22 and the protective bracket 23 are further fixedly arranged on the bracket main body 21; and the protective pressure strip 22 and the protective bracket 23 can be fixed to the bracket main body 21 by means of buckles. The bracket 2 is mainly used to provide left and right rotation and link with the optical fiber channel tray 3, and at the same time provide a fiber penetrating channel for optical fibers and a fixed position for the base plate 1. As shown in Fig. 7 and Fig. 8, which are schematic diagrams of the base plate rotating 90° to the left and 90° to the right, respectively.

Preferably, the base plate 1 can comprise a base plate main body 11, the fiber splicing area 122 and the fiber storage area 121 are both arranged in the base plate main body 11, the top of the base plate main body 11 can be provided with an upper cover, and the front end of the base plate main body 11 can be provided with a panel fixing frame 14.

The optical fiber distribution sub-frame can further comprise a front panel 5, the front panel 5 can comprise a panel main body, a fiber dialing pen and a magnet; the panel main body and the base plate main body 11 can be connected by a shaft and fixed by magnetic attraction of the magnet; and of course, in other embodiments the magnet can be replaced with a bayonet structure such that the panel main body and the base plate main body 11 are fixed through the bayonet.

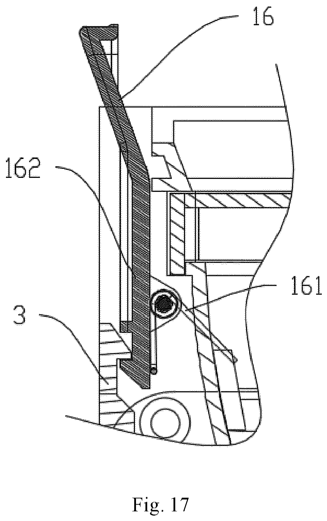

Further, the base plate 1 can further comprise switches 16 arranged on two opposite sides of the base plate main body 11, the switches 16 can be matched with the optical fiber channel tray 3. When the base plate 1 does not need to rotate, the switches 16 can be turned off so that the switches 16 can be matched with the optical fiber channel tray 3 to restrict the base plate 1 from rotating out, thus ensuring the reliability of static use of the optical fiber distribution sub-frame. The switch 16 can comprise an unlocking torsional spring 161 and an unlocking buckle 162, the unlocking buckle 162 can be automatically locked with the optical fiber channel tray 3 under the drive of the unlocking torsional spring 161. When the unlocking buckle 162 is shifted, the unlocking buckle 162 can be unlocked with the optical fiber channel tray 3 to open the switch 16, the base plate 1 can be removed, and when the unlocking buckle 162 is not shifted, the unlocking torsional spring 161 automatically resists the unlocking buckle 162 to close the switch 16 (as shown in Fig. 17).

After the symmetrical structure is designed, the embodiment not only meets the requirements of high-density optical fiber routing (96 cores), but further takes into account the left and right rotation mounting, thus breaking through the unidirectional rotation technology of the prior high-density optical fiber distribution sub-frame; and the inclined 96-core high-density adapter assembly 4 can further match the rotation direction of the optical fiber distribution sub-frame to change the direction synchronously.

Further, a plurality of fiber trays 12 can be arranged in the base plate 1, the fiber storage area 121 and the fiber splicing area 122 are arranged on the fiber trays 12, and each of the fiber trays 12 is provided with a buckling position 123 and a buckling ear 124, the buckling positions 123 and the buckling ears 124 are arranged in a staggered manner along the arrangement direction of the plurality of the fiber trays 12, and the buckling ear 124 of one of the fiber trays 12 is fixed with the buckling position 123 of another adjacent fiber tray 12 by means of buckles. The buckling position 123 is protruded upward from the surface of the fiber tray 12, the fiber tray 12 is provided with a hollow corresponding to the buckling ear 124, and the buckling ear 124 is formed through bending and extending downward from the joint with the fiber tray 12 through the hollow to buckle with the buckling position 123 on the fiber tray 12 below. In this embodiment, through providing the buckling positions 123 and the buckling ears 124, a plurality of fiber trays 12 can be fastened and fixed with each other, and it is not easy to swing at will. Moreover, through providing the buckling positions 123 and the buckling ears 124 arranged in a staggered manner, the structure of each of the fiber trays 12 can be consistent, and there is no need to make various types of fiber trays 12.

The embodiment of the present invention further provides a method for reversing the above optical fiber distribution sub-frame, which can comprise the following steps.

S1: The bracket 2 together with the optical fiber channel tray 3 are removed from the mounting point position on one side of the base plate 1. During disassembly, the bracket 2 can be removed from the base plate 1, so that the bracket 2 and the optical fiber channel tray 3 are separated from the base plate 1, while the bracket 2 and the optical fiber channel tray 3 are kept fixed together, or the bracket 2, the optical fiber channel tray 3 and the base plate 1 can be separated and assembled later.

S2: The bracket 2 is reversibly mounted to the mounting point position on the other side of the base plate 1, and making the optical fiber channel tray 3 follow a reversal of the bracket 2. When it is found that the usage scenario changes and the current optical fiber distribution sub-frame is not suitable for the scenario, the bracket 2 and the optical fiber channel tray 3 can be disassembled from the base plate 1, and then assembled together after changing the appropriate direction.

Further, before detaching the bracket 2 from the base plate 1, the front panel 5 at the front end of the base plate 1 can be opened first, and then the pigtails on the adapter assembly 4 and the pigtails of the fiber tray 12 groups inside the base plate 1 can be removed. Then, the adapter assembly 4 can be unlocked and removed from the base plate 1, wherein the adapter assembly 4 comprises an adapter bracket 41 and an adapter 42, the adapter bracket 41 can be fixed to the base plate 1 through a locking buckle 114, and when the adapter bracket 41 is removed, the locking buckle 114 can be unlocked first, and then the adapter assembly 4 can be removed; then the adapter 42 can then be removed from the adapter bracket 41 first; and the adapter bracket 41 is reversed and the adapter 42 is remounted, that is, after the adapter bracket 41 is reversed, the adapter 42 is further reversed and remounted to the reversed adapter bracket 41. Such an arrangement ensures that the adapter 42 can synchronize with the left-hand and right-hand rotation of the optical fiber distribution sub-frame after the adapter assembly 4 is reversed.

Preferably, the step of removing the adapter 42 from the adapter bracket 41 can comprise: shifting the elastic arm 413 on the adapter bracket 41 to unlock and remove the first adapter 42 in each set of adapters 42 from the adapter bracket 41, wherein the set of adapters 42 can be a row of adapters 42 assembled in one of the above-mentioned mounting windows 411; and sliding to remove the remaining adapters 42. In this set of adapters 42, locking can be performed through one of the adapters 42. After the adapter 42 is unlocked, the subsequent adapters 42 need not be unlocked, and can be directly slid out, which is more convenient to disassemble.

In some embodiments, the step after removing the bracket 2 together with the optical fiber channel tray 3 from the mounting point position on one side of the base plate 1 can comprise: reversing the protective pressure strip 22 and protective bracket 23 on bracket 2. In this embodiment, a first fiber penetrating channel 212 is arranged on the bracket 2, and a protective pressure strip 22 and a protective bracket 23 configured to arrange wires can be arranged at the first fiber penetrating channel 212. The first fiber passage 212 can be arranged on both the front and back sides of the bracket 2, while the protective pressure strip 22 and the protective bracket 23 can only be arranged on one side. When the protective pressure strip 22 and the protective bracket 23 need to be used on the other side, the protective pressure strip 22 and the protective bracket 23 on one side can be removed and then mounted on the other side, thus reducing parts.

In some alternative embodiments, the step after removing the bracket 2 together with the optical fiber channel tray 3 from the mounting point position on one side of the base plate 1 can further comprise: removing the fixing modules 15 at the entrances of the two fiber storage areas 121 in the base plate 1; and then replacing the fixing modules 15 at the entrances of the two fiber storage areas 121 in the base plate 1 so that the place where the optical fiber enters and the place where the optical fiber exits can be adapted to the corresponding fixing modules 15.

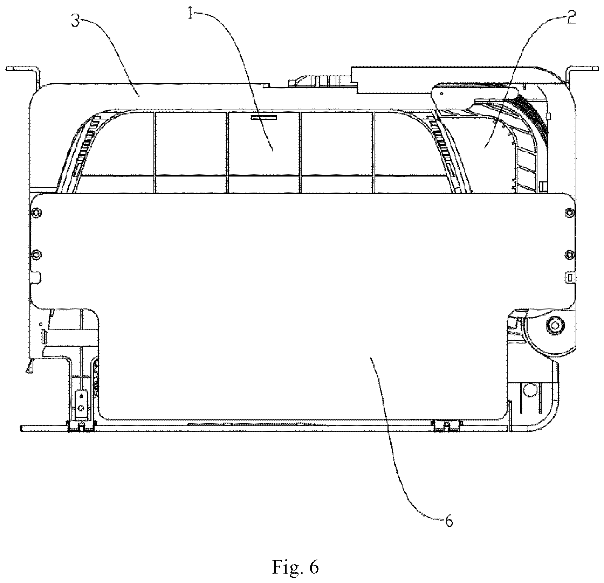

Further, as shown in Fig. 6, the step before removing the bracket 2 together with the optical fiber channel tray 3 from the mounting point position on one side of the base plate 1 can further comprise: removing a bottom tray 6 of the base plate 1. The step of removing the bracket 2 together with the optical fiber channel tray 3 from the mounting point position on one side of the base plate 1 can comprise: turning on the switch 16 on the base plate 1, and then removing the base plate 1.

In some embodiments, the step of reversibly mounting the bracket 2 to the mounting point position on the other side of the base plate 1, and making the optical fiber channel tray 3 follow a reversal of the bracket 2 can comprise: reversing the bracket 2 and the optical fiber channel tray 3 integrally; then remounting the base plate 1 and the bottom tray 6; and then mounting the adapter assembly 4 on the base plate 1 and fix the adapter assembly 4 with buckles.

Further, after reversing, the fiber coiling can be re-performed, and then the front panel 5 can be closed again.

The present invention provides an optical fiber distribution sub-frame and a reversing method which can rotate and interchange left and right, so as to solve the problem that the operation is inconvenient and the optical fiber distribution sub-frame needs to be replaced due to the scene change. The main realization mode is that through structural design, the optical fiber distribution sub-frame can meet two usage scenarios of left-hand or right-hand rotation through two different assembly modes, so that an optical fiber distribution sub-frame can be reassembled and replaced in the rotation direction on site when the usage scenario needs to be changed.

In the description of the present invention, it should be noted that the orientation or positional relationship indicated by the terms "upper", "lower", etc. are based on the orientation or positional relationship shown in the drawings, which is only for the convenience of describing the present invention and simplifying the description, instead of indicating or implying that the pointed device or element must have a specific orientation, be configured and operated in a specific orientation, therefore it may not be understood as a limitation of the present invention. Unless otherwise clearly specified and limited, the terms "mounting", "connected" and "connection" should be understood in a broad sense. For example, it can be a fixed connection, a detachable connection, or an integral connection; further can be a mechanical connection, or an electrical connection; further can be directly connected, or indirectly connected through an intermediate medium, or can be the internal communication between two components. For those of ordinary skill in the art, the specific meanings of the above-mentioned terms in the present application may be understood according to specific circumstances.

It should be noted that relational terms such as "first" and "second" are only for distinguishing one entity or operation from another entity or operation in the present invention, and do not necessarily require or imply any such actual relationship or order between these entities or operations. Moreover, the terms "include", "comprise" or any other variants thereof are intended to cover non-exclusive inclusion, so that a process, method, article or device comprising a series of elements not only comprises those elements, but further comprises those that are not explicitly listed, or further comprises elements inherent to the process, method, article, or device. If there are no more restrictions, the elements defined by the sentence "comprising a..." does not exclude the existence of other same elements in the process, method, article, or device comprising the elements.

The above-mentioned are only the embodiments of the present invention, so that those skilled in the art may understand or implement the present invention. For those skilled in the art, various modifications to these embodiments will be obvious, and the general principles defined herein may be implemented in other embodiments without departing from the spirit or scope of the present invention. Therefore, the present invention will not be limited to the embodiments shown in this document, but will be subject to the widest scope consistent with the principles and novel features applied herein.

## Claims

1. An optical fiber distribution sub-frame, comprising
a base plate (1), two opposite sides of which are each provided with a mounting point position;
a bracket (2), which is detachably mounted at the mounting point position on any side of the base plate (1); and
an optical fiber channel tray (3), which is hinged to the bracket (2), and when the bracket (2) is mounted at the mounting point positions on different sides, the optical fiber channel tray (3) is reversed along with the bracket (2).

2. The optical fiber distribution sub-frame according to claim 1, wherein
the base plate (1) is symmetrically arranged about a central axis thereof, and the mounting point positions are symmetrically distributed on opposite sides of the central axis.

3. The optical fiber distribution sub-frame according to claim 1, wherein
the bracket (2) is provided with a sliding buckle (211), the mounting point position is provided with a sliding groove (111), and the bracket (2) and the base plate (1) are detachably connected through the sliding buckle (211) and the sliding groove (111).

4. The optical fiber distribution sub-frame according to claim 3, wherein
the bracket (2) is further provided with a first limiting part (213), the mounting point position is provided with a second limiting part (112) correspondingly, the first limiting part (213) matches with the second limiting part (112) to limit the position, an extension direction of the first limiting part (213) is different from that of the sliding buckle (211), and a limiting direction of the sliding buckle (211) to the base plate (1) is at least partially different from that of the first limiting portion (213) to the base plate (1).

5. The optical fiber distribution sub-frame according to claim 1, wherein
the optical fiber channel tray (3) and the bracket (2) are detachably hinged together by means of locking screws (35).

6. The optical fiber distribution sub-frame according to claim 1, wherein
the bracket (2) is provided with a first fiber penetrating channel (212), the first fiber penetrating channel (212) is configured for an optical fiber to enter the base plate (1), the bracket (2) is further provided with a protective pressure strip (22) blocking one side of the first fiber penetrating channel (212); and
the bracket (2) is further provided with a protective bracket (23), the protective bracket (23) is arranged in the first fiber penetrating channel (212), and the protective bracket (23) is provided with an optical fiber beam penetrating hole.

7. The optical fiber distribution sub-frame according to claim 6, wherein
the two opposite sides of the base plate (1) are each provided with an optical fiber perforation (1), and the optical fiber perforations (113) communicate with the first fiber penetrating channel (212); and
two side surfaces of the base plate (1) provided with the optical fiber perforations (113) extend obliquely in a direction approaching each other, so that a distance between the optical fiber perforations (113) on the two sides is smaller than a maximum distance between the two side surfaces.

8. The optical fiber distribution sub-frame according to claim 1, wherein the optical fiber distribution sub-frame further comprises an adapter assembly (4), and the adapter assembly (4) comprises:
an adapter bracket (41), which is detachably connected to the base plate (1); and
an adapter (42), which is arranged obliquely relative to the adapter bracket (41), and the adapter (42) is detachably clamped to the adapter bracket (41).

9. The optical fiber distribution sub-frame according to claim 8, wherein
the adapter bracket (41) is provided with at least one mounting window (411), each mounting window (411) is provided with at least two adapter mounting positions, the adapter bracket (41) is provided with a clamping structure (412) that matches with the adapter (42) corresponding to each adapter mounting position; and
the adapter bracket (41) is further provided with an elastic arm (413), the clamping structure (412) located at one end of the mounting window (411) is provided on the elastic arm (413), and when the elastic arm (413) is shifted, all the adapters (42) in the mounting window (411) corresponding to the elastic arm (413) are unlocked.

10. The optical fiber distribution sub-frame according to claim 9, wherein
the adapter bracket (41) comprises a frame (414) and a support plate (415) arranged in the frame (414), the support plate (415) separates the frame (414) into at least two of the mounting windows (411), and one end of the support plate (415) is spaced apart from an inner wall of the frame (414) to form a receiving space, and
this end of the support plate (415) is connected to the frame (414) by means of connecting rods (416), each connecting rod (416) is provided with two of the elastic arms (413), the elastic arms (413) are all received in the receiving space, and the elastic arms (413) correspond one-to-one with the mounting windows (411).

11. The optical fiber distribution sub-frame according to claim 1, wherein
two fiber storage areas (121) are symmetrically arranged in the base plate (1), a fiber splicing area (122) is arranged between the two fiber storage areas (121), fixing modules (15) are symmetrically arranged in the base plate (1) corresponding to entrances of the fiber storage areas (121), and the fixing modules (15) are detachably connected to the base plate (1).

12. The optical fiber distribution sub-frame according to claim 1, wherein the bracket (2) is detachably mounted with a supporting member (24), and the supporting member (24) is provided with a jumper outlet.

13. A method for reversing the optical fiber distribution sub-frame according to claim 1, comprising the following steps:
removing the bracket (2) together with the optical fiber channel tray (3) from the mounting point position on one side of the base plate (1); and
reversibly mounting the bracket (2) to the mounting point position on the other side of the base plate (1), and making the optical fiber channel tray (3) follow a reversal of the bracket (2).

14. The reversing method according to claim 13, wherein the step before removing the bracket (2) together with the optical fiber channel tray (3) from the mounting point position on one side of the base plate (1) further comprises:
unlocking and removing the adapter assembly (4) from the base plate (1), wherein the adapter assembly (4) comprises an adapter bracket (41) and an adapter (42);
removing the adapter (42) from the adapter bracket (41); and
reversing the adapter bracket (41) and remounting the adapter (42).

15. The reversing method according to claim 14, wherein the step of removing the adapter (42) from the adapter bracket (41) comprises:
shifting the elastic arm (413) on the adapter bracket (41) to unlock and remove the first adapter (42) in each set of adapters (42) from the adapter bracket (41); and
sliding to remove the remaining adapters (42).

16. The reversing method according to claim 13, wherein the step after removing the bracket (2) together with the optical fiber channel tray (3) from the mounting point position on one side of the base plate (1) comprises:
reversing the protective pressure strip (22) and protective bracket (23) on the bracket (2).

17. The reversing method according to claim 13, whereinthe step after removing the bracket (2) together with the optical fiber channel tray (3) from the mounting point position on one side of the base plate (1) further comprises:
removing the fixing modules (15) at the entrances of the two fiber storage areas (121) in the base plate (1); and
replacing the fixing modules (15) at the entrances of the two fiber storage areas (121) in the base plate (1).
